# FASCICULE DE BREVET EUROPEEN

(11) **EP 1 973 340 B1**
(45) Date de publication et mention de la délivrance du brevet: **07.05.2014**
(21) Numéro de dépôt: 08102621.3
(22) Date de dépôt: 14.03.2008
(51) Int. Cl.: H04N 5/225, G02B 23/04, G02B 27/14

(54) **Dispositif d'imagerie à plusieurs détecteurs**
Bildgebungsvorrichtung mit mehreren Sensoren
Imaging device with several detectors

(30) Priorité: 19.03.2007 FR 0701968
(43) Date de publication de la demande: 24.09.2008
(73) Titulaire: ASTRIUM SAS, 92150 Suresnes (FR)
(72) Inventeur: Safa, Frédéric, 31400, TOULOUSE (FR); Clochet, Alain, 31500, TOULOUSE (FR)
(74) Mandataire: Cabinet Plasseraud

(56) Documents cités:
- WO-A-02/082167
- WO-A2-03/067632
- GB-A- 2 284 273
- JP-A- 7 222 038
- US-A- 5 864 132
- US-A1- 2003 007 254
- US-B1- 7 119 969
- WARREN J. SMITH: "Modern Optical Engineering" 1990, MCGRAW-HILL , USA , XP002453311 * page 235 - page 239 * * page 432 *
- MICHAEL BASS: "Handbook of Optics" 1995, MCGRAW-HILL , USA , XP002453312 * page 2.19 - page 2.20 *

## Description

La présente invention concerne un dispositif d'imagerie qui comprend plusieurs détecteurs.

De nombreuses applications requièrent un dispositif d'imagerie capable de former et de saisir une image correspondant à un champ d'entrée de rayonnement qui est large. L'observation d'une zone géographique terrestre ou d'un secteur céleste figurent parmi celles-ci. Le champ d'entrée large permet d'obtenir des prises de vues qui couvrent chacune une partie importante de la zone terrestre ou du secteur céleste visé. Un nombre réduit de prises de vues est alors suffisant pour couvrir toute la zone ou tout le secteur. Lorsque le champ d'entrée est assez large pour que la scène observée soit entièrement comprise dans ce champ, une prise de vue unique est suffisante pour couvrir toute la scène. Les difficultés de raccordement entre des prises de vues différentes et les difficultés causées par des pointages successifs du dispositif sont alors évitées.

Une façon connue de réaliser un dispositif d'imagerie qui possède un large champ d'entrée et qui présente une résolution suffisante consiste à concevoir l'instrument pour que des parties différentes d'une même image soient formées sur des détecteurs différents lors d'une même prise de vue. Chacun des détecteurs saisit alors une partie de l'image, et l'image complète est reconstituée par juxtaposition des parties d'image qui sont saisies respectivement par les détecteurs.

Mais, pour des raisons d'encombrement, il n'est pas possible de disposer plusieurs détecteurs d'une façon accolée, c'est-à-dire bord-à-bord, dans un même plan de formation d'image du dispositif sans perdre une bande de l'image entre les deux détecteurs. En effet, chaque détecteur est constitué d'une matrice bidimensionnelle d'éléments photosensibles, appelés pixels, qui sont juxtaposés selon un pas déterminé à l'intérieur d'un cadre périphérique. Ce cadre contient notamment des connexions électriques qui relient les pixels du détecteur. L'épaisseur du cadre produit alors une rupture dans une ligne de pixels qui est à cheval sur deux détecteurs accolés. Typiquement, la bande d'image manquante correspond à deux fois la largeur du cadre.

Plusieurs configurations de dispositifs d'imagerie à large champ d'entrée existent déjà, qui produisent des images complètes sans bandes manquantes. Ils consistent essentiellement à dupliquer le plan dans lequel l'image de la scène est formée par le dispositif, et à répartir les détecteurs entre les deux plans de formation d'image selon des agencements qui sont complémentaires. On entend par agencements complémentaires des détecteurs dans plusieurs plans de formation d'image des agencements selon lesquels chaque détecteur saisit une partie de l'image complète, et tels que l'image complète peut être reconstituée en juxtaposant les parties d'image.

Ces configurations sont distinguées, notamment, par le système qui est utilisé pour dupliquer le plan dans lequel l'image est formée. Parmi les systèmes qui sont couramment utilisés pour cette fonction, on peut citer ceux à base d'une lame semi-réfléchissante, ceux à base de miroirs qui sont juxtaposés et orientés différemment, ceux à base d'un prisme, ceux à base d'un miroir pivotant, etc.

Mais ces systèmes de duplication du plan de formation de l'image sont souvent trop petits lorsque le dispositif d'imagerie possède un large champ d'entrée. Une partie du rayonnement qui est destiné à former l'image est alors coupée par le système de duplication.

A l'inverse, ces systèmes de duplication du plan de formation de l'image sont parfois trop encombrants par rapport aux espaces qui sont disponibles entre les éléments du dispositif qui participent à la formation de l'image, c'est-à-dire les miroirs et/ou les lentilles. La construction du dispositif d'imagerie est alors difficile.

En outre, pour les systèmes de duplication du plan d'image qui sont à base de miroirs multiples, une fraction du rayonnement qui converge initialement pour former l'une des parties d'image n'est pas dirigé par le système de duplication vers le détecteur qui est dédié à cette partie d'image. Cette fraction de rayonnement parvient alors jusqu'à un détecteur qui est dédié à une autre partie d'image, et réduit le contraste de cette dernière.

Le document US 005864132 A divulgue un dispositif d'imagerie comprenant plusieurs détecteurs.

Un but de la présente invention est donc de fournir un système d'imagerie à large champ d'entrée qui permet de former une image complète d'une scène saisie, et qui ne présente pas les inconvénients cités ci-dessus.

Pour cela, l'invention propose un dispositif d'imagerie qui est destiné à former une image d'une scène éloignée située à l'intérieur d'un champ d'entrée du dispositif, et qui comprend :
- une entrée d'un rayonnement produit par la scène, avec une pupille d'entrée qui limite transversalement un faisceau primaire de ce rayonnement ;
- un système diviseur qui est placé dans le faisceau primaire et qui est adapté pour le diviser en plusieurs faisceaux secondaires ;
- plusieurs systèmes d'imagerie qui sont disposés pour recevoir respectivement les faisceaux secondaires, et qui sont adaptés pour former, à partir de ceux-ci, des images respectives de parties de la scène ; et
- plusieurs détecteurs de parties d'image, dont chacun est associé à l'un des systèmes d'imagerie et est disposé pour saisir l'image d'une partie de la scène qui est formée par ce système d'imagerie.

Le système diviseur, les systèmes d'imagerie et les détecteurs sont disposés en outre pour que les parties d'image qui sont saisies par les détecteurs soient complémentaires par rapport à la scène, de sorte qu'une image complète de la scène peut être reconstituée à partir des parties d'image.

Le dispositif d'imagerie est caractérisé en ce qu'il comprend en outre un système afocal qui est disposé entre l'entrée du rayonnement et le système diviseur pour transmettre le faisceau primaire de rayonnement, et qui produit une pupille intermédiaire plus petite que la pupille d'entrée du dispositif d'imagerie. Selon une autre caractéristique de l'invention, le système diviseur est placé dans cette pupille intermédiaire.

Ainsi, un dispositif selon l'invention comprend plusieurs voies d'imagerie qui sont disposées en aval du système afocal dans le sens de propagation du rayonnement à l'intérieur du dispositif. Chaque système d'imagerie forme une partie de l'image complète dans un plan distinct, de sorte que des détecteurs qui saisissent des parties d'image adjacentes entre elles par rapport à la scène visée ne sont pas eux-mêmes accolés. De cette façon, les parties d'image qui sont saisies peuvent être complémentaires par rapport à la scène entière. Dans le cadre de l'invention, on entend par parties d'image complémentaires des portions d'une même image qui permettent de reconstituer l'image complète de la scène sans bandes manquantes entre deux portions d'images qui sont voisines dans l'image complète. Eventuellement, deux portions d'image voisines peuvent présenter un recouvrement, ou un espace de séparation qui est suffisamment étroit pour que la fine bande d'image manquante puisse être restituée, par interpolation par exemple. En effet, une image complète de la scène peut encore être obtenue de cette façon à partir d'une prise de vue unique.

Au sens de l'invention, l'expression «parties d'image complémentaires qui sont saisies» inclut des agencements selon lesquels plusieurs détecteurs sont disposés dans les plans de formation d'image de certaines au moins des différentes voies d'imagerie. Dans ce cas, chaque voie d'imagerie peut fournir une image lacunaire de la scène totale qui est présente dans le champ d'entrée du dispositif, et les parties de l'image complète qui manquent pour l'une des voies d'imagerie sont complétées par les autres voies. Pour une telle configuration du dispositif, une image complète de la scène peut être formée par chaque voie d'imagerie. La couverture de l'image complète par les détecteurs résulte alors de la superposition des images qui sont formées les différentes voies d'imagerie, en indiquant les parties d'image qui sont saisies par les détecteurs de chaque voie d'imagerie.

Un premier avantage de l'invention résulte de l'utilisation du système afocal qui produit une pupille intermédiaire de taille inférieure à la pupille d'entrée de l'ensemble du dispositif. Le système diviseur qui est placé dans cette pupille intermédiaire peut alors avoir lui-même une taille inférieure à celle qui serait nécessaire pour un système placé dans la pupille d'entrée du dispositif, sans réduire le faisceau primaire de rayonnement. L'invention permet donc d'utiliser un système diviseur de faisceau qui est plus petit, moins encombrant et de coût inférieur.

Un second avantage de l'invention résulte de l'utilisation du système afocal pour saisir des scènes éloignées. Des rayons du faisceau primaire qui proviennent d'un même point de la scène sont parallèles à la sortie du système afocal. Lorsque ces rayons sont encore parallèles dans les faisceaux secondaires qui sont produits par le système diviseur, le système d'imagerie de chaque voie d'imagerie peut alors être déplacé parallèlement à la direction du faisceau secondaire correspondant, dans un intervalle de positions qui est plus grand que si ces rayons étaient convergents dans le faisceau secondaire. Ainsi, la position de chaque système d'imagerie peut être ajustée en fonction de caractéristiques intrinsèques à celui-ci, et en fonction de contraintes d'encombrement à l'intérieur de l'ensemble du dispositif.

Un troisième avantage résulte du placement du système diviseur dans la pupille intermédiaire qui est produite par le système afocal. De cette façon, les faisceaux secondaires de rayonnement peuvent être bien séparés, notamment dans des directions écartées. Aucun mélange ne se produit donc, entre les fractions de rayonnement qui correspondent à des parties d'image différentes. Le contraste de chaque partie d'image qui est saisie par un détecteur est ainsi augmenté.

De façon avantageuse, le système diviseur, les systèmes d'imagerie et les détecteurs peuvent être disposés de sorte que les parties d'image qui sont saisies par les détecteurs forment un découpage bidimensionnel de l'image complète de la scène. L'image entière d'une scène étendue dans deux directions perpendiculaires peut ainsi être saisie en une unique prise de vue.

Eventuellement, ce découpage peut être un découpage matriciel, c'est-à-dire que les parties d'image ont des lignes de séparation qui sont parallèles à deux directions perpendiculaires. Une telle configuration permet d'utiliser des détecteurs de parties d'image qui sont rectangulaires ou carrés, et disponibles commercialement. De cette façon, l'image complète de la scène peut être divisée à la fois selon une longueur et selon une largeur de celle-ci, sans bandes d'image manquantes.

En particulier, le champ d'entrée d'un dispositif d'imagerie selon l'invention peut posséder une ouverture angulaire qui est supérieure à 5°, et de préférence supérieure à 10°.

Divers modes de réalisation d'un dispositif d'imagerie selon l'invention peuvent en outre utiliser l'une et/ou à l'autre des dispositions suivantes :
- le système afocal peut comprendre un télescope afocal ;
- le système diviseur peut comprendre au moins un prisme ou au moins deux miroirs juxtaposés. Eventuellement, chacun de ces miroirs peut être un miroir plan ; et
- chaque système d'imagerie peut comprendre un télescope.

Le système afocal peut être adapté pour former en outre une image intermédiaire de la scène dans un plan qui est situé entre la pupille d'entrée du dispositif et la pupille intermédiaire. Le dispositif peut alors comprendre en outre un diaphragme de champ qui est placé dans ce plan. Dans ce cas, des diaphragmes pupillaires peuvent être ajoutés dans des pupilles des systèmes d'imagerie. De cette façon, de la lumière parasite qui entre dans le dispositif d'imagerie ou qui est produite à l'intérieur de celui-ci, notamment par diffraction, peut être réduite selon le principe de Lyot.

L'invention propose aussi un engin d'observation d'une zone géographique, notamment un engin de type aéronef, missile, satellite ou sonde spatiale, qui comprend un dispositif d'imagerie tel que décrit précédemment.

D'autres particularités et avantages de la présente invention apparaîtront dans la description ci-après d'un exemple de réalisation non limitatif, en référence aux dessins annexés, dans lesquels :
- la figure 1 représente un dispositif d'imagerie selon l'invention, installé à bord d'un satellite ; et
- la figure 2 est une vue grossie d'une partie du dispositif d'imagerie de la figure 1.

Il est entendu que ces figures sont des schémas de principe destinés à faciliter une compréhension de l'invention. Mais les dimensions et les distances qui sont représentées ne correspondent ni à des dimensions, ni à des rapports de dimensions réels.

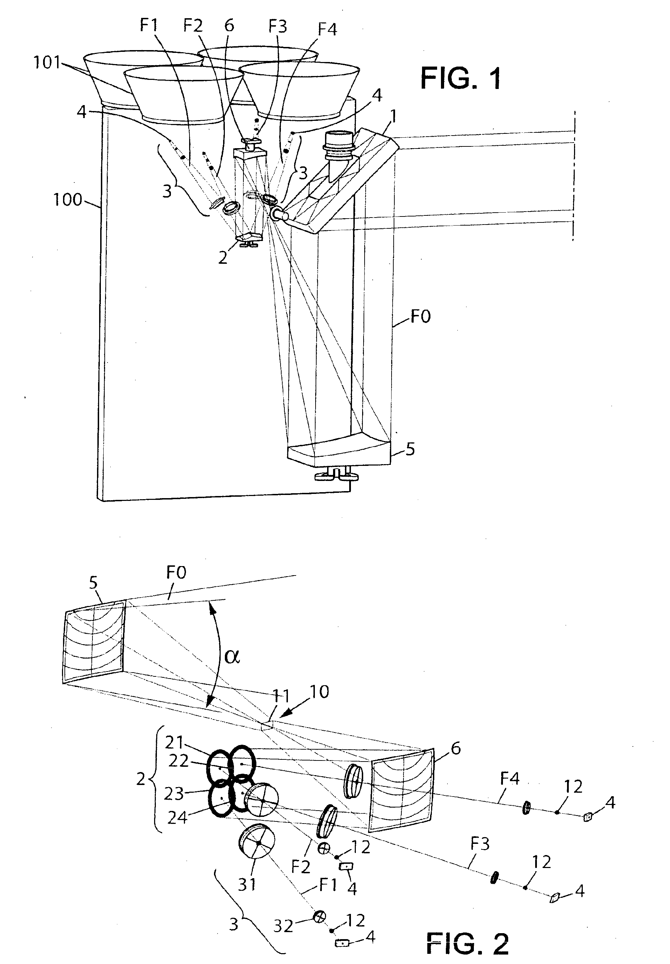

Le dispositif d'imagerie selon l'invention qui est décrit maintenant comprend un miroir d'entrée 1 (figure 1), qui peut être un miroir plan. Ce miroir 1 limite transversalement un faisceau de rayonnement qui pénètre dans le dispositif. Ce faisceau de rayonnement, dit faisceau primaire, est noté F0 sur les figures et provient des éléments d'une scène qui est située dans le champ d'entrée du dispositif. D'une façon connue, les bords du miroir 1 définissent une pupille d'entrée du dispositif, qui peut avoir une forme quelconque, notamment circulaire, rectangulaire ou carrée.

Le miroir 1 réfléchit le faisceau primaire F0 vers l'entrée d'un système afocal qui est constitué, dans le mode de réalisation décrit, par deux miroirs sphériques référencés respectivement 5 et 6. Conformément au principe des systèmes afocaux, deux rayons parallèles qui arrivent sur le miroir 5 sont encore parallèles après réflexion sur le miroir 6. Pour cela, un foyer image du miroir 5 est confondu avec un foyer objet du miroir 6.

Le système afocal forme, dans un plan focal de ce système, une image intermédiaire de la scène située dans le champ d'entrée, lorsque cette scène est éloignée. On entend par scène éloignée un ensemble de sources de rayonnement qui sont situées à une distance suffisamment grande du miroir 1 de sorte que des rayons qui sont issus d'un même point de la scène et qui arrivent sur le miroir 1 sont parallèles ou quasi-parallèles. L'image intermédiaire de la scène qui est formée par le système afocal est référencée 10 sur la figure 2. Un diaphragme 11 peut être placé d'une façon superposée à cette image, pour limiter le champ d'entrée du dispositif d'imagerie. Un tel diaphragme est couramment appelé diaphragme de champ. Il détermine l'ouverture angulaire du champ d'entrée du dispositif d'imagerie. Cette ouverture est notée α sur la figure 2. Le diaphragme 11 supprime notamment des rayons parasites très obliques qui peuvent entrer dans le dispositif.

Le système afocal forme aussi une image du miroir d'entrée 1. Celle-ci est une pupille du dispositif complet d'imagerie, dite pupille intermédiaire. Autrement dit, tout rayon qui provient du champ d'entrée du dispositif et qui traverse la pupille d'entrée formée par le miroir 1 traverse aussi la pupille intermédiaire. La pupille intermédiaire qui est produite par le système afocal peut avoir, par exemple, une dimension qui est au moins deux fois plus petite que la dimension correspondante du miroir 1, associée par le système afocal. Autrement dit, le grossissement du système afocal entre le miroir 1 et la pupille intermédiaire est inférieur à un demi. Une façon d'obtenir un tel grossissement, lorsque les miroirs 5 et 6 sont respectivement concave et convexe, est de choisir le miroir 6 avec une distance focale qui est inférieure à la moitié de celle du miroir 5.

Un système diviseur de faisceau est alors placé dans cette pupille intermédiaire. Autrement dit, le système diviseur est superposé à l'image du miroir 1 par les deux miroirs 5 et 6. Ce système diviseur est référencé 2 sur les figures. Dans le mode de réalisation qui est décrit, le système diviseur 2 est adapté pour diviser le faisceau primaire F0 en quatre faisceaux secondaires, notés F1-F4. Par exemple, le système 2 comprend quatre miroirs plans, référencés 21-24 sur la figure 2, et qui sont juxtaposés. De façon avantageuse, les miroirs 21-24 du système diviseur 2 sont adjacents pour éviter qu'une partie du faisceau primaire F0 soit perdue.

A partir du système diviseur 2, le dispositif comprend quatre voies d'imagerie indépendantes qui sont respectivement alimentées par l'un des miroirs 21-24 du système diviseur 2. Chaque voie comprend un système d'imagerie 3 et un détecteur 4, de sorte que l'ensemble du dispositif comprend quatre systèmes d'imagerie et quatre détecteurs qui sont respectivement associés à ceux-ci. L'axe optique de chaque système d'imagerie 3 est déterminé en premier lieu par le système diviseur 2, de sorte qu'une configuration adaptée du système 2 permet de disposer les systèmes d'imagerie 3 dans des directions qui sont écartées les unes des autres. Plus précisément, l'axe optique de chaque système d'imagerie 3 est déterminé à partir de la direction qui est conjuguée avec celle du faisceau primaire F0 par le système diviseur 2. A partir de cette direction, l'axe optique de chaque système d'imagerie 3 peut être ajusté pour viser, au centre du champ de ce système, une partie déterminée du champ d'entrée total du dispositif afin de former la partie d'image correspondante.

Chaque système d'imagerie 3 peut être lui-même un télescope d'un type connu de l'Homme du métier, étant donné que le faisceau secondaire F1-F4 qui est transmis par le système diviseur 2 à ce système d'imagerie est un faisceau de rayons parallèles. Par exemple, chaque système 3 peut comprendre une première lentille 31 et une seconde lentille 32 qui sont disposées pour former sur le détecteur 4 correspondant, une image d'une partie de la scène située dans le champ d'entrée.

Les quatre systèmes d'imagerie 3 peuvent être identiques, de même que les quatre détecteurs 4. Ces derniers peuvent être constitués de matrices d'éléments photosensibles, par exemple de 500x256 éléments. De cette façon, l'image de la scène présente dans le champ d'entrée peut être saisie par une matrice fictive équivalente à 1000x512 éléments, Eventuellement, un recouvrement peut être prévu entre deux parties d'image adjacentes, correspondant à quelques colonnes d'éléments photosensibles situées au bord des détecteurs.

Chaque système 3 forme, sur le détecteur 4 correspondant, une image d'une partie de la scène présente dans le champ d'entrée. Cette partie de scène est déterminée par l'orientation du miroir correspondant 21-24 du système diviseur 2 et par l'axe optique du système d'imagerie 3. Les miroirs 21-24 peuvent avoir des axes optiques respectifs qui sont orientés selon des arrêtes d'une pyramide, de sorte que les parties d'image qui sont formées sur les quatre détecteurs 4 sont sensiblement complémentaires par rapport à la scène du champ d'entrée. De cette façon, les parties d'image qui sont saisies respectivement par les détecteurs 4 forment un découpage de l'image complète de la scène en deux parties selon une longueur de celle-ci, et aussi en deux parties selon une largeur de la même image.

Selon un perfectionnement de l'invention, des diaphragmes supplémentaires peuvent être ajoutés dans le dispositif, par exemple au niveau de pupilles de sortie des systèmes d'imagerie 3. De tels diaphragmes supplémentaires, référencés 12 sur la figure 2, sont couramment appelés diaphragmes pupillaires. En combinaison avec le diaphragme de champ 11, ils contribuent à augmenter le contraste de l'image qui est saisie par les détecteurs 4.

Un dispositif selon l'invention peut ainsi avoir une ouverture α qui est supérieure à 20°C, toute en fournissant une image continue d'une scène qui occupe toute l'ouverture du champ d'entrée.

Un tel dispositif d'imagerie peut être facilement installé à bord d'un engin d'observation terrestre ou céleste, tel qu'un satellite, notamment un satellite géostationnaire. La figure 1 représente de façon symbolique un support 100 sur lequel le dispositif est agencé, et qui est solidaire de tuyères 101 du satellite.

Il est entendu que le dispositif d'imagerie qui a été décrit en référence aux figures peut être modifié de multiples manières, tout en conservant certains au moins des avantages de l'invention. Notamment, le système afocal qui est formé par les miroirs 5 et 6, ainsi que les systèmes d'imagerie 3, peuvent avoir des constitutions équivalentes optiquement, par rapport à la fonction de chacun de ces systèmes au sein du dispositif. En outre, le nombre de voies d'imagerie peut être supérieur à 4, par exemple égal à 6, 9 ou 12.

Enfin, l'invention peut être appliquée à des dispositifs d'imagerie qui sont adaptés pour des intervalles spectraux de rayonnement variables, tels que l'intervalle de lumière visible, des intervalles de rayonnement infrarouge ou encore de rayonnement ultraviolet.

## Revendications

1. Dispositif d'imagerie destiné à former une image d'une scène éloignée située à l'intérieur d'un champ d'entrée (α) dudit dispositif, et comprenant :
- une entrée (1) d'un rayonnement produit par la scène, avec une pupille d'entrée limitant transversalement un faisceau primaire (F0) dudit rayonnement entrant dans le dispositif ;
- un système diviseur (2) placé dans le faisceau primaire et adapté pour diviser ledit faisceau primaire en plusieurs faisceaux secondaires (F1-F4) ;
- plusieurs systèmes d'imagerie (3) disposés pour recevoir respectivement les faisceaux secondaires, et adaptés pour former, à partir desdits faisceaux secondaires, des images respectives de parties de la scène ; et
- plusieurs détecteurs de parties d'image (4), chaque détecteur étant associé à l'un des systèmes d'imagerie et disposé pour saisir l'image d'une partie de la scène formée par ledit système d'imagerie,
le système diviseur (2), les systèmes d'imagerie (3) et les détecteurs (4) étant disposés en outre pour que les parties d'image saisies par les détecteurs soient complémentaires par rapport à la scène, en formant un découpage d'une image complète de la scène, de sorte que ladite image complète de la scène peut être reconstituée à partir desdites parties d'image, et les dites parties d'image qui sont saisies respectivement par les détecteurs ne formant pas de bandes manquantes par rapport à la scène, entre deux parties d'image qui sont voisines dans l'image complète de la scène,
le dispositif d'imagerie étant **caractérisé en ce qu'**il comprend en outre un système afocal (5, 6) disposé entre l'entrée du rayonnement (1) et le système diviseur (2) pour transmettre ledit faisceau primaire de rayonnement (F0), ledit système afocal produisant une pupille intermédiaire plus petite que la pupille d'entrée du dispositif d'imagerie,
et **en ce que** le système diviseur (2) comprend au moins un prisme ou au moins deux miroirs juxtaposés (21-24) et est placé dans ladite pupille intermédiaire.

2. Dispositif selon la revendication 1, dans lequel le système diviseur (2), les systèmes d'imagerie (3) et les détecteurs (4) sont disposés en outre de sorte que les parties d'image saisies par les détecteurs forment un découpage bidimensionnel de l'image complète de la scène.

3. Dispositif selon la revendication 2, dans lequel le système diviseur (2), les systèmes d'imagerie (3) et les détecteurs (4) sont disposés en outre de sorte que les parties d'image saisies par les détecteurs forment un découpage matriciel de l'image complète de la scène.

4. Dispositif selon l'une quelconque des revendications précédentes, comprenant quatre systèmes d'imagerie (3) et quatre détecteurs (4) associés respectivement aux dits systèmes d'imagerie, dans lequel le système diviseur (2) est adapté pour diviser le faisceau primaire (F0) en quatre faisceaux secondaires (F1-F4), et dans lequel ledit système diviseur, lesdits systèmes d'imagerie et lesdits détecteurs sont disposés en outre de sorte que les parties d'image saisies respectivement par les détecteurs forment un découpage de l'image complète de la scène en deux parties selon une longueur de ladite image complète, et aussi en deux parties selon une largeur de ladite image complète.

5. Dispositif selon l'une quelconque des revendications précédentes, dans lequel le système afocal (5, 6) est un télescope afocal.

6. Dispositif selon l'une quelconque des revendications précédentes, dans lequel le système afocal (5, 6) est adapté en outre de sorte que la pupille intermédiaire possède une dimension au moins deux fois plus petite qu'une dimension correspondante de la pupille d'entrée du dispositif, associée par ledit système afocal.

7. Dispositif selon l'une quelconque des revendications précédentes, dans lequel chaque système d'imagerie (3) est un télescope.

8. Dispositif selon l'une quelconque des revendications précédentes, dans lequel le système afocal (5, 6) est adapté pour former en outre une image intermédiaire (10) de la scène, dans un plan situé entre la pupille d'entrée du dispositif et la pupille intermédiaire, et ledit dispositif d'imagerie comprenant en outre un diaphragme de champ (11) placé dans ledit plan.

9. Dispositif selon la revendication 8, comprenant en outre des diaphragmes pupillaires (12) situés dans des pupilles des systèmes d'imagerie (3).

10. Dispositif selon l'une quelconque des revendications précédentes, dans lequel le champ d'entrée dudit dispositif possède une ouverture angulaire (α) supérieure à 5°, de préférence supérieure à 10°.

11. Engin d'observation d'une zone géographique comprenant un dispositif d'imagerie selon l'une quelconque des revendications précédentes.

12. Engin d'observation selon la revendication 11, de type aéronef, missile, satellite ou sonde spatiale.

## Patentansprüche

1. Bildgebungsvorrichtung zur Bildung eines Bilds einer innerhalb eines Eingangsfelds (a) der Vorrichtung befindlichen, entfernten Szene, umfassend:
- einen Eingang (1) einer durch die Szene erzeugten Strahlung mit einer Eingangspupille, die einen in die Vorrichtung eintretenden Primärstrahl (F0) der Strahlung transversal begrenzt;
- ein Teilersystem (2), das im Primärstrahl angeordnet und angepasst ist, den Primärstrahl in mehrere Sekundärstrahlen (F1 - F4) zu teilen;
- mehrere Bildgebungssysteme (3), die angeordnet sind, um jeweils die Sekundärstrahlen zu empfangen, und angepasst sind, um aus den Sekundärstrahlen jeweilige Bilder von Teilen der Szene zu bilden; und
- mehrere Sensoren (4) von Bildteilen, wobei jeder Sensor einem der Bildgebungssysteme zugeordnet und angeordnet ist, um das vom Bildgebungssystem gebildete Bild eines Teils der Szene zu erfassen,
wobei das Teilersystem (2), die Bildgebungssysteme (3) und die Sensoren (4) ferner angeordnet sind, damit die von den Sensoren erfassten Bildteile in Bezug auf die Szene ergänzend sind, indem sie eine Zergliederung eines vollständigen Bilds der Szene bilden, sodass sich das vollständige Bild der Szene anhand der Bildteile rekonstruieren lässt, und wobei die jeweils von den Sensoren erfassten Bildteile in Bezug auf die Szene keine fehlenden Streifen zwischen zwei im vollständigen Bild der Szene benachbarten Bildteilen bilden,
wobei die Bildgebungsvorrichtung **dadurch gekennzeichnet ist, dass** sie ferner ein zwischen dem Eingang (1) der Strahlung und dem Teilersystem (2) angeordnetes afokales System (5, 6) zum Übertragen des Primärstrahls (F0) der Strahlung umfasst, wobei das afokale System eine Zwischenpupille erzeugt, die kleiner als die Eingangspupille der Bildgebungsvorrichtung ist,
und dass das Teilersystem (2) zumindest ein Prisma oder zumindest zwei nebeneinanderliegende Spiegel (21 -24) umfasst und in der Zwischenpupille angeordnet ist.

2. Vorrichtung nach Anspruch 1, wobei das Teilersystem (2), die Bildgebungssysteme (3) und die Sensoren (4) ferner so angeordnet sind, dass die von den Sensoren erfassten Bildteile eine zweidimensionale Zergliederung des vollständigen Bilds der Szene bilden.

3. Vorrichtung nach Anspruch 2, wobei das Teilersystem (2), die Bildgebungssysteme (3) und die Sensoren (4) ferner so angeordnet sind, dass die von den Sensoren erfassten Bildteile eine matrizielle Zergliederung des vollständigen Bilds der Szene bilden.

4. Vorrichtung nach einem der vorangehenden Ansprüche, umfassend vier Bildgebungssysteme (3) und vier Sensoren (4), die jeweils den Bildgebungssystemen zugeordnet sind, wobei das Teilersystem (2) angepasst ist, um den Primärstrahl (F0) in vier Sekundärstrahlen (F1 - F4) zu unterteilen und wobei das Teilersystem, die Bildgebungssysteme und die Sensoren ferner so angeordnet sind, dass die jeweils von den Sensoren erfassten Bildteile eine Zergliederung des vollständigen Bilds in zwei Teile entlang einer Länge des vollständigen Bilds sowie in zwei Teile entlang einer Breite des vollständigen Bilds bilden.

5. Vorrichtung nach einem der vorangehenden Ansprüche, wobei das afokale System (5, 6) ein afokales Teleskop ist.

6. Vorrichtung nach einem der vorangehenden Ansprüche, wobei das afokale System (5, 6) ferner so angepasst ist, dass die Zwischenpupille eine zumindest zweimal kleinere Abmessung als eine entsprechende Abmessung der über das afokale System zugeordneten Eingangspupille der Vorrichtung besitzt.

7. Vorrichtung nach einem der vorangehenden Ansprüche, wobei jedes Bildgebungssystem (3) ein Teleskop ist.

8. Vorrichtung nach einem der vorangehenden Ansprüche, wobei das afokale System (5, 6) angepasst ist, um ferner ein Zwischenbild (10) der Szene in einer zwischen der Eingangspupille der Vorrichtung und der Zwischenpupille angeordneten Ebene zu bilden, und wobei die Bildgebungsvorrichtung ferner eine in der Ebene angeordnete Feldblende (11) umfasst.

9. Vorrichtung nach Anspruch 8, ferner umfassend Pupillenblenden (12), die sich in den Pupillen der Bildgebungssysteme (3) befinden.

10. Vorrichtung nach einem der vorangehenden Ansprüche, wobei das Eingangsfeld der Vorrichtung eine Winkelöffnung (α) von über 5°, vorzugsweise über 10° besitzt.

11. Gerät zur Beobachtung eines geografischen Bereichs, umfassend eine Bildgebungsvorrichtung nach einem der vorangehenden Ansprüche.

12. Beobachtungsgerät nach Anspruch 11, von der Art eines Flugzeugs, eines Flugkörpers, eines Satelliten oder einer Raumsonde.

## Claims

1. Imaging device intended to produce an image of a distant scene located inside an input field (α) of said device, and comprising:
- an input (1) for radiation produced by the scene, with an entrance pupil transversely limiting a primary beam (F0) of said radiation entering the device;
- a splitter system (2) located in the primary beam and adapted to split said primary beam into several secondary beams (F1-F4);
- several imaging systems (3) disposed so as to receive the secondary beams respectively and adapted to produce respective images of parts of the scene from said secondary beams; and
- several image part detectors (4), each detector co-operating with one of the imaging systems and disposed so as to capture the image of a part of the scene produced by said imaging system,
the splitter system (2), imaging systems (3) and detectors (4) also being disposed so that the image parts captured by the detectors are complementary relative to the scene, forming a partition of a complete image of the scene so that said complete image of the scene can be reconstituted from said image parts, and said image parts which are captured respectively by the detectors do not form missing strips of the scene between two image parts which are adjacent in the complete image of the scene,
the imaging device being **characterised in that** it further comprises an afocal system (5, 6) disposed between the radiation input (1) and the splitter system (2) in order to transmit said primary radiation beam (F0), said afocal system producing an intermediate pupil smaller than the entrance pupil of the imaging device,
and **in that** the splitter system (2) comprises at least one prism or at least two juxtaposed mirrors (21-24) and is located in said intermediate pupil.

2. Device as claimed in claim 1, in which the splitter system (2), imaging systems (3) and detectors (4) are also disposed so that the image parts captured by the detectors form a two-dimensional partition of the complete image of the scene.

3. Device as claimed in claim 2, in which the splitter system (2), imaging systems (3) and detectors (4) are also disposed so that the image parts captured by the detectors form an array partition of the complete image of the scene.

4. Device as claimed in any one of the preceding claims, comprising four imaging systems (3) and four detectors (4) co-operating respectively with said imaging systems, in which the splitter system (2) is configured to split the primary beam (F0) into four secondary beams (F1-F4), and in which said splitter system, said imaging systems and said detectors are also disposed so that the image parts captured respectively by the detectors form a partition of the complete image of the scene into two parts along a length of said complete image and also into two parts along a width of said complete image.

5. Device as claimed in any one of the preceding claims, in which the afocal system (5, 6) is an afocal telescope.

6. Device as claimed in any one of the preceding claims, in which the afocal system (5, 6) is also configured so that the intermediate pupil has a dimension at least two times smaller than a corresponding dimension of the entrance pupil of the device, said dimensions being associated with one another by said afocal system.

7. Device as claimed in any one of the preceding claims, in which each imaging system (3) is a telescope.

8. Device as claimed in any one of the preceding claims, in which the afocal system (5, 6) is also configured to produce an intermediate image (10) of the scene in a plane located between the entrance pupil of the device and the intermediate pupil, and said imaging device also comprises a field-stop diaphragm (11) positioned in said plane.

9. Device as claimed in claim 8, further comprising pupillary diaphragms (12) located in pupils of the imaging systems (3).

10. Device as claimed in any one of the preceding claims, in which the input field of said device has an angular aperture (α) greater than 5°, preferably greater than 10°.

11. Craft for observing a geographical zone and comprising an imaging device as claimed in any one of the preceding claims.

12. Observation craft as claimed in claim 11, of aircraft, missile, satellite or space probe type.
